# FASCICULE DE BREVET EUROPEEN

(11) **EP 4 267 838 B1**
(45) Date de publication et mention de la délivrance du brevet: **22.10.2025**
(21) Numéro de dépôt: 21843707.7
(22) Date de dépôt: 21.12.2021
(51) Int. Cl.: F02C 7/042

(54) **ENTRÉE D'AIR D'ENSEMBLE PROPULSIF D'AÉRONEF COMPRENANT UN ORGANE DE DÉPLACEMENT D'UNE PARTIE AMONT MOBILE ET PROCÉDÉ D'UTILISATION D'UNE TELLE ENTRÉE D'AIR**
LUFTEINLASS FÜR EINE FLUGZEUGANTRIEBSEINHEIT MIT EINEM ELEMENT ZUR BEWEGUNG EINES BEWEGLICHEN VORGELAGERTEN TEILS UND VERFAHREN ZUR VERWENDUNG EINES SOLCHEN LUFTEINLASSES
AIR INLET FOR AN AIRCRAFT PROPULSION UNIT COMPRISING A MEMBER FOR MOVING A MOVABLE UPSTREAM PORTION AND METHOD FOR USING SUCH AN AIR INLET

(30) Priorité: 28.12.2020 FR 2014186
(43) Date de publication de la demande: 01.11.2023
(73) Titulaire: Safran Nacelles, 76700 Gonfreville-l'Orcher (FR)
(72) Inventeur: KIOUA, Hazem, 77550 MOISSY-CRAMAYEL (FR); MARLAY, Thomas, 77550 MOISSY-CRAMAYEL (FR); LEMOINE, Damien, 77550 MOISSY-CRAMAYEL (FR); SCHMITTER, Ophélie, 77550 MOISSY-CRAMAYEL (FR)
(74) Mandataire: Argyma
(86) Numéro de dépôt international: PCT/EP2021/086996
(87) Numéro de publication internationale: WO 2022/144236

(56) Documents cités:
- FR-A1- 3 023 586
- US-A- 3 058 693
- US-A1- 2010 084 507
- US-A1- 2020 386 158

## Description

### Domaine technique

La présente invention concerne le domaine des entrées d'air d'ensemble propulsif d'aéronef comprenant une partie amont mobile.

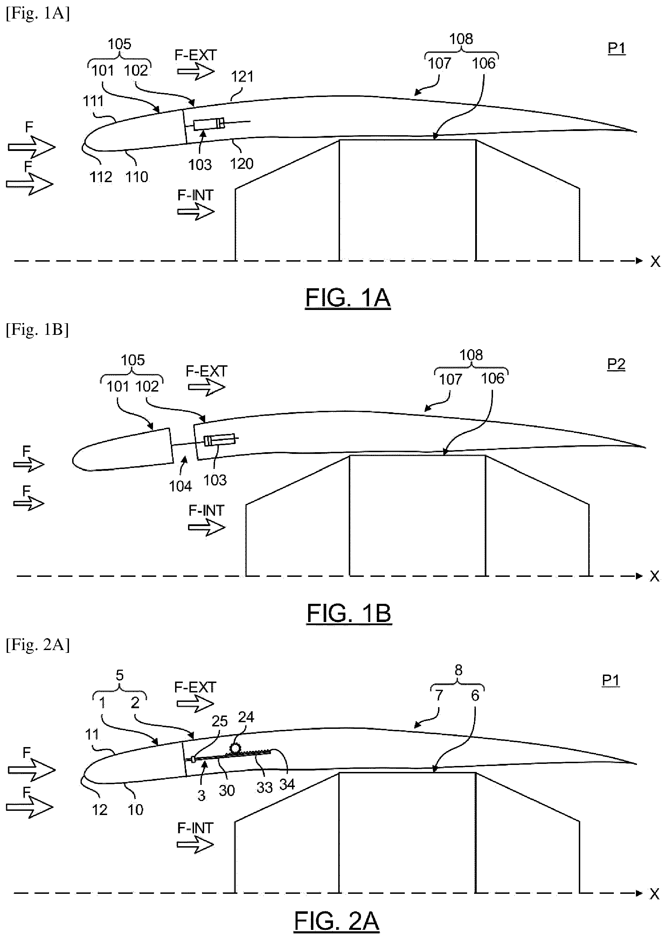

De manière connue, il est représenté sur la [Fig.1A] un ensemble propulsif d'aéronef 108 s'étendant selon un axe longitudinal X orienté d'amont en aval et comprenant une turbomachine 106 et une nacelle 107. La turbomachine 106 s'étend selon l'axe longitudinal X et est configurée pour permettre la propulsion de l'aéronef à partir de l'accélération d'un flux d'air intérieur F-INT circulant d'amont en aval dans la turbomachine 106. La nacelle 107 s'étend quant à elle extérieurement de manière périphérique autour de la turbomachine 106 selon l'axe longitudinal X et permet de guider le flux d'air intérieur F-INT dans la turbomachine 106. Par la suite, les termes « amont » et « aval » sont définis par rapport à l'orientation de l'axe longitudinal X. Sauf indication contraire, les termes « intérieur » et « extérieur » sont quant à eux définis selon la direction radiale par rapport à l'axe longitudinal X. On précise également que le flux d'air intérieur F-INT désigne le flux massique d'air admis dans la nacelle 107.

De manière connue, en référence à la [Fig.1A] et la [Fig.1B], la nacelle 107 comprend à son extrémité amont une entrée d'air à géométrie variable 105 de manière à adapter le flux d'air intérieur F-INT guidé dans la turbomachine 106 en fonction des conditions de vol. Plus précisément, de manière connue, l'entrée d'air 105 comprend une partie amont mobile 101, une partie aval fixe 102 et des vérins linéaires 103 montés dans la partie aval fixe 102 et équirépartis sur la circonférence de l'entrée d'air 105. Les vérins linéaires 103 sont configurés pour déplacer ensemble la partie amont mobile 101 en translation selon l'axe longitudinal X par rapport à la partie aval fixe 102 entre une position rentrée P1 ([Fig.1A]), dans laquelle la partie amont mobile 101 est adjacente à la partie aval fixe 102, et une position sortie P2 ([Fig.1B]), dans laquelle la partie amont mobile 101 est écartée de la partie aval fixe 102.

De manière connue, comme illustré sur la [Fig.1A] et la [Fig.1B], la partie amont mobile 101 comporte une paroi intérieure amont 110 tournée vers l'axe longitudinal X et une paroi extérieure amont 111 opposée à la paroi intérieure amont 110, qui sont reliées ensemble à l'amont par une lèvre d'entrée d'air 112 comprenant un bord d'attaque. La partie amont mobile 101 comporte ainsi un profil arrondi aérodynamique qui permet de séparer un flux d'air amont F en le flux d'air intérieur F-INT guidé par la paroi intérieure amont 110 et un flux d'air extérieur F-EXT guidé par la paroi extérieure amont 111. La partie aval fixe 102 comporte quant à elle une paroi intérieure aval 120 et une paroi extérieure aval 121 qui s'étendent respectivement dans la continuité aval de la paroi intérieure amont 110 et la paroi extérieure amont 111 de la partie amont mobile 101 en position rentrée P1. En position sortie P2, la partie amont mobile 101 et la partie aval fixe 102 sont espacés par un canal traversant 104 de circulation fluidique entre le flux d'air extérieur F-EXT et le flux d'air intérieur F-INT.

En pratique, il est connu d'utiliser une telle entrée d'air à géométrie variable 105 pour un ensemble propulsif d'aéronef supersonique, à savoir dont la turbomachine 106 est configurée pour permettre la propulsion de l'aéronef jusqu'à des vitesses supérieures à la vitesse du son. En effet, l'entrée d'air 105 en position rentrée P1 permet une admission d'air adaptée pour les vitesses subsoniques élevées, i.e. de nombre de Mach supérieur à 0,5, et pour les vitesses supersoniques. La position sortie P2 permet quant à elle d'augmenter la section de l'entrée d'air 105 et donc le flux d'air intérieur F-INT admis, ce qui la rend adaptée pour les faibles vitesses subsoniques, i.e. de nombre de Mach inférieur à 0,5. Ceci permet de contrôler le flux d'air intérieur F-INT admis dans la turbomachine 106.

Dans les faits, une telle entrée d'air 105 à géométrie variable présente l'inconvénient d'augmenter l'encombrement et la masse embarquée de l'aéronef. En particulier, les vérins linéaires 103 utilisés, traditionnellement hydrauliques, pneumatiques ou électriques, sont nombreux, lourds et occupent un volume important dans la partie aval fixe 102. De tels vérins linéaires sont complexes à intégrer dans une entrée d'air 105 de faible épaisseur. En outre, le pilotage du déplacement de la partie amont mobile 101 nécessite de synchroniser les vérins linéaires 103, ce qui est complexe.

Une entrée d'air selon l'art antérieur est divulguée dans le document US2020/386158 A1.

Dans le domaine éloigné des aéronefs à décollage vertical, il est connu par la demande US3058693A1 une entrée d'air avec une partie amont mobile en translation grâce à une vis entraînée par la rotation d'un écrou. Une telle entrée d'air présente les mêmes inconvénients que décrit précédemment.

Dans le domaine éloigné de la maintenance des aéronefs, il est connu par la demande US20100084507A1 une entrée d'air avec une partie amont mobile pour faciliter, au sol, l'accès aux différents équipements et/ou leur remplacement.

L'invention vise ainsi à éliminer au moins certains de ces inconvénients.

### PRESENTATION DE L'INVENTION

L'invention concerne une entrée d'air d'ensemble propulsif d'aéronef, ledit ensemble propulsif d'aéronef s'étendant selon un axe longitudinal orienté d'amont en aval et comprenant une turbomachine configurée pour permettre la propulsion de l'aéronef à partir de l'accélération d'un flux d'air intérieur circulant d'amont en aval dans la turbomachine, ladite entrée d'air s'étendant de manière circonférentielle autour de l'axe longitudinal et comprenant une partie amont mobile, une partie aval fixe et au moins un organe de déplacement configuré pour déplacer la partie amont mobile en translation par rapport à la partie aval fixe, ladite partie amont mobile comprenant :
- une paroi intérieure amont, tournée vers l'axe longitudinal et configurée pour guider le flux d'air intérieur,
- une paroi extérieure amont, opposée à la paroi intérieure amont et configurée pour guider un flux d'air extérieur, et
- une lèvre d'entrée d'air reliant la paroi intérieure amont et la paroi extérieure amont,
- ladite partie amont mobile étant mobile entre une position rentrée, dans laquelle la partie amont mobile est adjacente à la partie aval fixe, et une position sortie, dans laquelle la partie amont mobile est écartée en amont de la partie aval fixe de manière à délimiter entre eux un canal traversant de circulation fluidique entre le flux d'air extérieur et le flux d'air intérieur.

L'invention est remarquable en ce que l'organe de déplacement comprend :
- au moins une barre de guidage reliée à la partie amont mobile, et
- une barre d'entraînement comprenant une pluralité de dents,
- la partie aval fixe comportant, pour chaque organe de déplacement:
   - une roue dentée configurée pour être entraînée en rotation et pour coopérer avec les dents de la barre d'entraînement de manière à former une liaison pignon-crémaillère permettant de déplacer l'organe de déplacement et la partie amont mobile, et
   - au moins un organe de guidage configuré pour guider la barre de guidage lors du déplacement de l'organe de déplacement.

On précise que le terme de « barre » est employé dans l'ensemble de la demande pour qualifier une pièce longue et rigide, de section quelconque, telle que circulaire, carrée, rectangulaire ou aplatie à titre d'exemples non exhaustifs.

Grâce à l'invention, la partie amont mobile d'une entrée d'air à géométrie variable peut avantageusement être déplacée de manière précise, pérenne et pratique grâce à une liaison pignon crémaillère intégrée dans la partie aval fixe et guidée en translation. Le déplacement de la partie amont mobile permet de modifier en vol le flux d'air intérieur admis dans l'entrée d'air et ainsi s'adapter à différentes vitesses de l'aéronef, tel que le passage à des vitesses supersoniques à titre d'exemple. La liaison pignon crémaillère présente l'avantage, par rapport aux vérins linéaires traditionnellement utilisés, d'être plus robuste et économique tout en offrant une grande précision. Les organes de guidage permettent en outre d'obliger la partie amont mobile à se déplacer selon une direction longitudinale donnée, en évitant tout écart ou variabilité, ce qui augmente la fiabilité de la liaison pignon crémaillère.

De préférence, l'organe de déplacement est configuré pour déplacer la partie amont mobile en translation sensiblement longitudinale par rapport à la partie aval fixe, autrement dit selon une direction formant un angle d'au plus 20° par rapport à l'axe longitudinal.

De préférence, l'organe de guidage est configuré pour former une liaison glissière avec l'organe de déplacement.

Selon un aspect de l'invention, la partie amont mobile s'étend de manière circonférentielle autour de l'axe longitudinal pour agir de manière globale et homogène sur l'admission du flux d'air intérieur. De préférence, la partie amont mobile forme un ensemble unitaire, ce qui facilite son déplacement. Préférentiellement, la partie amont mobile forme un ensemble monobloc.

De préférence, l'entrée d'air comprend une pluralité d'organes de déplacement de manière à former une pluralité de liaisons pignon-crémaillère. La liaison pignon crémaillère permet avantageusement de faciliter la synchronisation des organes de déplacement et ainsi de déplacer la partie amont mobile de manière rapide et simple. Préférentiellement, l'entrée d'air comprend une pluralité de barres de guidage équiréparties sur la circonférence de l'entrée d'air pour répartir les efforts appliqués sur la partie amont mobile et ainsi favoriser son déplacement.

Selon un aspect préféré de l'invention, la paroi intérieure amont et la paroi extérieure amont de la partie amont mobile comportent une longueur longitudinale sensiblement identique. On précise que le terme « sensiblement » indique ici que la longueur de la paroi intérieure amont varie d'au plus 10% par rapport à celle de la paroi extérieure amont. La partie amont mobile et la partie aval fixe coopèrent ainsi de manière simple et pratique en position rentrée. En position sortie, le canal traversant permet avantageusement d'augmenter fortement la section d'entrée d'air et donc le flux d'air intérieur admis, ainsi que de réduire le bruit généré.

Selon un aspect de l'invention :
- la barre d'entraînement s'étend dans le prolongement aval de la barre de guidage et comprend une paroi extérieure comprenant une portion angulaire d'entraînement, où sont montées les dents, et une portion angulaire de guidage, et
- au moins un organe de guidage se présente sous la forme d'un organe de guidage aval configuré pour guider successivement la barre de guidage et la portion angulaire de guidage de la barre d'entraînement.

De manière avantageuse, cela permet de réduire l'encombrement et la masse embarquée de l'organe de déplacement, en particulier la longueur longitudinale de la barre de guidage en permettant à un même organe de guidage de guider la barre de guidage et la barre d'entraînement.

Selon un aspect de l'invention, la portion angulaire de guidage s'étend sur au moins 120° de la paroi extérieure de la barre d'entraînement. De préférence, la portion angulaire de guidage s'étend sur plus de 180° de la paroi extérieure de la barre d'entraînement, et préférentiellement, sur au plus 330° de la paroi extérieure de la barre d'entraînement. Un guidage au moins semi-périphérique de la barre d'entraînement permet avantageusement de contrôler précisément la trajectoire de la partie amont mobile. Ceci garantit la robustesse et la pérennité de l'organe de déplacement sans perturber la liaison pignon crémaillère.

Selon un aspect de l'invention, la portion angulaire d'entraînement comporte une zone évidée dans laquelle sont montées les dents. Un tel montage des dents dans un renfoncement permet de limiter leur encombrement. De préférence, les dents sont montées dans la zone évidée de sorte à s'étendre de manière radialement intérieure à la portion angulaire de guidage par rapport à l'axe de l'organe de déplacement. Autrement dit, la barre d'entraînement comporte une section transversale, dents comprises, qui est incluse dans une section transversale de la barre de guidage. La taille et la forme de la barre d'entraînement sont ainsi inférieures ou égales à celles de la barre de guidage, de sorte qu'un organe de guidage adapté pour la barre de guidage l'est également pour la barre d'entraînement.

Selon un premier aspect de l'invention, l'organe de guidage aval s'étend de manière périphérique autour de l'organe de déplacement. Ceci permet un guidage optimal, à savoir un contrôle précis et fin de la direction de déplacement de l'organe de déplacement, sans écart ou variabilité ce qui augmente sa longévité.

Selon un autre aspect de l'invention, l'organe de guidage aval s'étend de manière partiellement périphérique autour de l'organe de déplacement de manière à éviter la portion annulaire d'entraînement et ne pas restreindre la liaison pignon crémaillère.

Selon un aspect de l'invention, au moins un organe de déplacement comporte une pluralité de barres de guidage et un élément de liaison configuré pour relier la barre d'entraînement à chaque barre de guidage. Ceci permet de limiter le nombre d'organes de déplacement, et en particulier le nombre de barres d'entraînement, ce qui réduit l'encombrement et la masse embarquée.

Selon un aspect préféré de l'invention, au moins un organe de guidage se présente sous la forme d'au moins un organe de guidage amont fixé sur une extrémité amont de la partie aval fixe. De préférence, l'organe de guidage amont s'étend de manière périphérique autour de la barre de guidage. Un tel organe de guidage amont protège l'organe de déplacement dans une zone soumise aux turbulences et vibrations.

L'invention concerne également un ensemble propulsif d'aéronef s'étendant selon un axe longitudinal orienté d'amont en aval et comprenant une turbomachine configurée pour permettre la propulsion de l'aéronef à partir de l'accélération du flux d'air intérieur circulant d'amont en aval dans la turbomachine, ledit ensemble propulsif d'aéronef comprenant une entrée d'air telle que décrite précédemment.

De préférence, la turbomachine est supersonique, autrement dit configurée pour atteindre des vitesses supérieures à la vitesse du son. La position rentrée de l'entrée d'air est avantageusement adaptée pour des vitesses subsoniques élevées, i.e. de nombre de Mach supérieur à 0,5, et des vitesses supersoniques de la turbomachine. La position sortie est quant à elle adaptée pour les faibles vitesses subsoniques, i.e. de nombre de Mach inférieur à 0,5.

L'invention concerne en outre un procédé d'utilisation en vol d'une entrée d'air d'ensemble propulsif d'aéronef telle que décrite précédemment, dans lequel la roue dentée est entraînée selon un premier sens de rotation pour déplacer la partie amont mobile selon un premier sens de translation orienté de la position sortie vers la position rentrée, de manière à réduire le flux d'air intérieur admis.

Un autre aspect de l'invention, non revendiqué, concerne également un procédé d'utilisation en vol d'une entrée d'air d'ensemble propulsif d'aéronef telle que décrite précédemment, dans lequel la roue dentée est entraînée selon un deuxième sens de rotation, opposé au premier sens de rotation, pour déplacer la partie amont mobile selon un deuxième sens de translation, opposé au premier sens de translation, orienté de la position rentrée vers la position sortie, de manière à augmenter le flux d'air intérieur admis.

De manière avantageuse, une telle entrée d'air à géométrie variable permet de modifier le flux d'air intérieur admis par simple mise en rotation de la roue dentée, lors d'un changement de vitesse de l'ensemble propulsif d'aéronef. Le passage de la position rentrée à la position sortie et inversement est avantageusement simple, rapide et pratique à mettre en œuvre.

Un autre aspect de l'invention, non revendiqué, concerne par ailleurs un procédé d'utilisation en vol d'un ensemble propulsif d'aéronef, dans lequel, lorsque la vitesse générée par la turbomachine est supérieure à une vitesse seuil, la roue dentée est entraînée selon un premier sens de rotation pour déplacer la partie amont mobile selon un premier sens de translation orienté de la position sortie vers la position rentrée, de manière à réduire le flux d'air intérieur admis.

Un autre aspect de l'invention, non revendiqué, concerne de plus un procédé d'utilisation en vol d'un ensemble propulsif d'aéronef, dans lequel, lorsque la vitesse générée par la turbomachine est inférieure à une vitesse seuil, la roue dentée est entraînée selon un deuxième sens de rotation, opposé au premier sens de rotation, pour déplacer la partie amont mobile selon un deuxième sens de translation, opposé au premier sens de translation, orienté de la position rentrée vers la position sortie, de manière à augmenter le flux d'air intérieur admis.

De préférence, la vitesse seuil correspond à un nombre de Mach sensiblement égal à 0,5, à plus ou moins 20% près. Une telle vitesse seuil permet de distinguer, d'une part, les faibles vitesses subsoniques nécessitant une entrée d'air de grande section, et d'autre part, les vitesses subsoniques élevées et les vitesses supersoniques nécessitant une entrée d'air de plus faible section.

De manière avantageuse, une telle entrée d'air à géométrie variable est particulièrement pratique pour un ensemble propulsif d'aéronef supersonique, dans lequel les vitesses générées sont à la fois subsoniques et supersoniques. Une simple rotation de la roue dentée permet avantageusement de contrôler de manière simple, rapide et pratique l'admission du flux d'air intérieur.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1A] et
La [Fig.1B] sont des représentations schématiques en demi-coupe longitudinale d'un ensemble propulsif d'aéronef comprenant une entrée d'air selon l'art antérieur avec une partie amont mobile respectivement en position rentrée et en position sortie ;
La [Fig.2A] et
La [Fig.2B] sont des représentations schématiques en demi-coupe longitudinale d'un ensemble propulsif d'aéronef comprenant une entrée d'air selon une forme de réalisation de l'invention avec une partie amont mobile respectivement en position rentrée et en position sortie selon une forme de réalisation de l'invention ;
La [Fig.3] est une représentation schématique rapprochée de l'entrée d'air en position sortie de la [Fig.1B] ;
La [Fig.4A] et
La [Fig.4B] sont des représentations schématiques en demi-coupe longitudinale de l'entrée d'air selon une autre forme de réalisation de l'invention respectivement en position rentrée et en position sortie ;
La [Fig.5A] est une représentation schématique en perspective de l'organe de déplacement de l'entrée d'air en position sortie de la [Fig.4B] ;
La [Fig.5B] est une représentation schématique en coupe transversale de l'organe de déplacement de la [Fig.5A] ;
La [Fig.5C] est une représentation schématique en coupe transversale d'un organe de déplacement selon une forme de réalisation alternative de l'invention ;
La [Fig.6A] est une représentation schématique en perspective de l'organe de déplacement selon une autre forme de réalisation de l'invention ;
La [Fig.6B] est une représentation schématique en coupe transversale de l'organe de déplacement de la [Fig.6A] ;
La [Fig.6C] est une représentation schématique en coupe transversale d'un organe de déplacement selon une forme de réalisation alternative de l'invention ;
La [Fig.7A],
La [Fig.7B] et
La [Fig.7C] sont des représentations schématiques en coupe longitudinale d'un organe de déplacement selon trois autres formes de réalisation de l'invention ;
La [Fig.8] est une représentation schématique en perspective de l'entrée d'air en position sortie selon une forme de réalisation alternative de l'invention ; et
La [Fig.9] est une représentation schématique du procédé d'utilisation de l'entrée d'air selon un mode de réalisation de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

En référence à la [Fig.2A] et comme décrit dans le préambule, l'invention concerne un ensemble propulsif d'aéronef 8 s'étendant selon un axe longitudinal X orienté d'amont en aval et comprenant une turbomachine 6 et une nacelle 7. La turbomachine 6 s'étend selon l'axe longitudinal X et est configurée pour permettre la propulsion de l'aéronef à partir de l'accélération d'un flux d'air intérieur F-INT circulant d'amont en aval dans la turbomachine 6. La nacelle 7 s'étend quant à elle extérieurement de manière périphérique autour de la turbomachine 6 selon l'axe longitudinal X et permet de guider le flux d'air intérieur F-INT dans la turbomachine 6. Par la suite, les termes « amont » et « aval » sont définis par rapport à l'orientation de l'axe longitudinal X. Sauf indication contraire, les termes « intérieur » et « extérieur » sont quant à eux définis selon la direction radiale par rapport à l'axe longitudinal X. On précise également que le flux d'air intérieur F-INT désigne le flux massique d'air admis dans la nacelle 7.

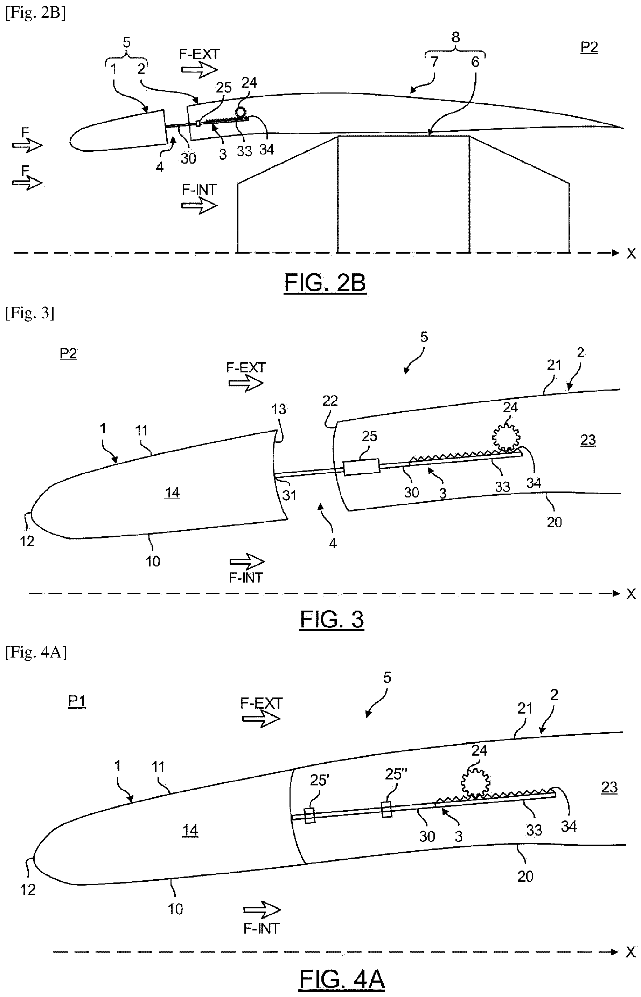

En référence à la [Fig.2A] et la [Fig.2B] et comme décrit dans le préambule, la nacelle 7 comprend à son extrémité amont une entrée d'air à géométrie variable 5 de manière à adapter le flux d'air intérieur F-INT guidé dans la turbomachine 6 en fonction des conditions de vol. Plus précisément, de manière connue, l'entrée d'air 5 comprend une partie amont mobile 1, une partie aval fixe 2 et des organes de déplacement 3 montés dans la partie aval fixe 2 et configurés pour déplacer la partie amont mobile 1 en translation par rapport à la partie aval fixe 2 entre :
- une position rentrée P1 ([Fig.2A]), dans laquelle la partie amont mobile 1 est adjacente à la partie aval fixe 2, et
- une position sortie P2 ([Fig.2B]), dans laquelle la partie amont mobile 1 est écartée en amont de la partie aval fixe 2.

Comme illustré sur la [Fig.2A], la [Fig.2B] et la [Fig.3] et décrit dans le préambule, la partie amont mobile 1 comporte une paroi intérieure amont 10 tournée vers l'axe longitudinal X et une paroi extérieure amont 11 opposée à la paroi intérieure amont 10, qui sont reliées ensemble à l'amont par une lèvre d'entrée d'air 12 comprenant un bord d'attaque. La partie amont mobile 1 comporte ainsi un profil arrondi aérodynamique qui permet de séparer un flux d'air amont F en le flux d'air intérieur F-INT guidé par la paroi intérieure amont 10 et un flux d'air extérieur F-EXT guidé par la paroi extérieure amont 11. La partie aval fixe 2 comporte quant à elle une paroi intérieure aval 20 et une paroi extérieure aval 21 ([Fig.3]) qui s'étendent respectivement dans la continuité aval de la paroi intérieure amont 10 et la paroi extérieure amont 11 de la partie amont mobile 1 en position rentrée P1. En position sortie P2, la partie amont mobile 1 et la partie aval fixe 2 délimitent ensemble un canal traversant 4 de circulation fluidique entre le flux d'air extérieur F-EXT et le flux d'air intérieur F-INT.

Dans l'exemple de la [Fig.3], la partie amont mobile 1 comporte une extrémité aval 13 qui délimite ensemble avec la paroi intérieure amont 10, la paroi extérieure amont 11 et la lèvre d'entrée d'air 12, une cavité annulaire 14 d'axe longitudinal X. La partie amont mobile 1 s'étend de manière circonférentielle autour de l'axe longitudinal X. De préférence, la partie amont mobile 1 forme un ensemble unitaire, préférentiellement monobloc, à savoir issu de même matière.

Toujours dans l'exemple de la [Fig.3], la partie aval fixe 2 comporte une extrémité amont 22 reliant la paroi intérieure aval 20 et la paroi extérieure aval 21, qui coopère par complémentarité de formes avec l'extrémité aval 13 de la partie amont mobile 1 en position rentrée P1, et délimite le canal traversant 4 avec l'extrémité aval 13 lorsque la partie amont mobile 1 est en position sortie P2. Dans cet exemple, la paroi intérieure amont 10 et la paroi extérieure amont 11 comportent une longueur identique pour faciliter la coopération. Toujours dans cet exemple, l'extrémité aval 13 de la partie amont mobile 1 et l'extrémité amont 22 de la partie aval fixe 2 s'étendent sensiblement transversalement par rapport à l'axe longitudinal X afin de coopérer de manière simple et pratique par contact. Le canal traversant 4 s'étend par suite sensiblement transversalement par rapport à l'axe longitudinal X. De préférence, comme illustré sur la [Fig.3], l'extrémité aval 13 de la partie amont mobile 4 est concave et l'extrémité amont 22 de la partie aval fixe 2 est convexe, de manière à ce que le canal traversant 4 soit incurvé et permette une circulation fluidique aérodynamique sans changement brutal de direction.

A titre d'exemple, il est connu d'utiliser une entrée d'air à géométrie variable 5 pour un ensemble propulsif d'aéronef supersonique, à savoir dont la turbomachine 6 est configurée pour permettre la propulsion de l'aéronef jusqu'à des vitesses supérieures à la vitesse du son. En effet, l'entrée d'air 5 en position rentrée P1 permet une admission d'air adaptée pour les vitesses subsoniques élevées, i.e. de nombre de Mach supérieur à 0,5, et des vitesses supersoniques. La position sortie P2 permet quant à elle d'augmenter la section de l'entrée d'air 5 et donc le flux d'air intérieur F-INT admis pour de faibles vitesses subsoniques, i.e. de nombre de Mach inférieur à 0,5. Il va de soi que l'invention ne se limite pas au contexte supersonique et s'applique à tout ensemble propulsif d'aéronef dont il est souhaité de modifier en vol l'admission de flux d'air intérieur F-INT pour s'adapter aux conditions de vol. La position rentrée P1 et la position sortie P2 permettent notamment de contrôler l'admission du flux d'air intérieur F-INT dans un ensemble propulsif d'aéronef subsonique.

De préférence, l'entrée d'air 5 comporte une forme allongée adaptée pour un ensemble propulsif d'aéronef subsonique et/ou supersonique. Selon un aspect, l'entrée d'air 5 comporte également un cône d'entrée d'air pour conserver un flux d'air intérieur F-INT subsonique dans la turbomachine 6 à des vitesses supersoniques de l'aéronef.

Selon l'invention, en référence à la [Fig.2A], la [Fig.2B] et la [Fig.3], chaque organe de déplacement 3 comprend une ou plusieurs barres de guidage 30 reliée(s) à la partie amont mobile 1, et une barre d'entraînement 33 comportant une pluralité de dents 34.

Toujours selon l'invention, la partie aval fixe 2 comporte quant à elle, pour chaque organe de déplacement 3 :
- une roue dentée 24 configurée pour être entraînée en rotation et pour coopérer avec les dents 34 de la barre d'entraînement 33 de manière à former une liaison pignon-crémaillère permettant de déplacer l'organe de déplacement 3 et la partie amont mobile 1, et
- un ou plusieurs organes de guidage 25 configuré(s) pour guider la (ou les) barre(s) de guidage 30 lors du déplacement de l'organe de déplacement 3.

De préférence, comme illustré sur la [Fig.2A], la [Fig.2B] et la [Fig.3], l'organe de déplacement 3 permet de déplacer la partie amont mobile 1 en translation sensiblement longitudinale, à savoir selon une direction formant un angle d'au plus 20° avec l'axe longitudinal X. De préférence également, chaque organe de guidage 25 forme une liaison glissière avec l'organe de déplacement 3, selon la direction sensiblement longitudinale de déplacement.

Dans l'exemple de la [Fig.2A], la [Fig.2B] et la [Fig.3], un unique organe de déplacement 3 est représenté mais, de préférence, plusieurs organes de déplacement 3 sont répartis autour de la circonférence de l'entrée d'air 5 pour répartir les efforts appliqués sur la partie amont mobile 1 et faciliter son déplacement. Préférentiellement, l'entrée d'air 5 comporte au moins trois organes de déplacement 3, et de préférence au plus huit pour un déplacement aisé sans augmenter significativement la masse et l'encombrement générés. De préférence également, les organes de déplacement 3 sont équirépartis autour de la circonférence de l'entrée d'air 5. Il va de soi que l'invention s'applique également pour une répartition et/ou un nombre différent d'organes de déplacement 3. Plusieurs formes de réalisation sont décrites par la suite, en considérant un unique organe de déplacement 3. De préférence, tous les organes de déplacement 3 sont identiques. Alternativement, l'entrée d'air 5 comprend des organes de déplacement 3 selon plusieurs formes de réalisation différentes.

Dans la forme de réalisation illustrée sur la [Fig.3], l'organe de déplacement 3 comprend une unique barre de guidage 30 comprenant une extrémité amont 31 fixée sur la partie amont mobile 1, de préférence au niveau de l'extrémité aval 13 de la partie amont mobile 1. Lorsque la partie amont mobile 1 est rentrée P1, la barre de guidage 30 s'étend dans une cavité annulaire 23 de la partie aval fixe 2, délimitée par la paroi intérieure aval 20, l'extrémité amont 22 et la paroi extérieure aval 21. Lorsque la partie amont mobile 1 est sortie P2, la barre de guidage 30 s'étend également dans le canal traversant 4.

Dans cet exemple, la barre de guidage 30 est guidée par un unique organe de guidage 25 monté dans la cavité annulaire 23 de la partie aval fixe 2, plus précisément au voisinage de l'extrémité amont 22 pour permettre un guidage précis. De préférence, d'autres organes de guidage 25 sont montés en aval pour renforcer la précision du guidage de l'organe de déplacement 3. Un organe de déplacement 3 guidé par plusieurs organes de guidage 25 est avantageusement plus robuste et pérenne. Il va cependant de soi que le nombre et la position des organes de guidage 25 pourraient être différents.

De préférence également, l'organe de guidage 25 assure un guidage périphérique, à savoir global sur toute la périphérie de la barre de guidage 30, et se présente à titre d'exemples sous la forme d'un coussinet ou d'une douille à billes. Alternativement, l'organe de guidage 25 assure un guidage partiellement périphérique, à savoir localisé sur une portion angulaire de la périphérie de la barre de guidage 30, et se présente à titre d'exemples sous la forme d'un rail, de rouleaux ou de galets. Les organes de guidage 25 peuvent être de forme identique ou différente d'un organe de déplacement 3 à l'autre et le long d'un même organe de déplacement 3. Les organes de guidage 25 et/ou la barre de guidage 30 sont de préférence lubrifiés pour favoriser la liaison glissière.

Toujours en référence à la [Fig.3], la barre d'entraînement 33 s'étend dans la cavité annulaire 23 de la partie aval fixe 2, dans la continuité aval de la barre de guidage 30. De préférence, la barre d'entraînement 33 et la barre de guidage 30 forment une même pièce issue de même matière. Dans cet exemple, l'organe de déplacement 3 s'étend ainsi de manière rectiligne et sensiblement selon l'axe longitudinal X. La roue dentée 24 est quant à elle montée mobile en rotation selon un axe fixe transversal à l'axe longitudinal X et comporte des dents qui coopèrent avec les dents 34 de la barre d'entraînement 33 de manière à déplacer la barre d'entraînement 33 en translation et par suite l'organe de déplacement 3.

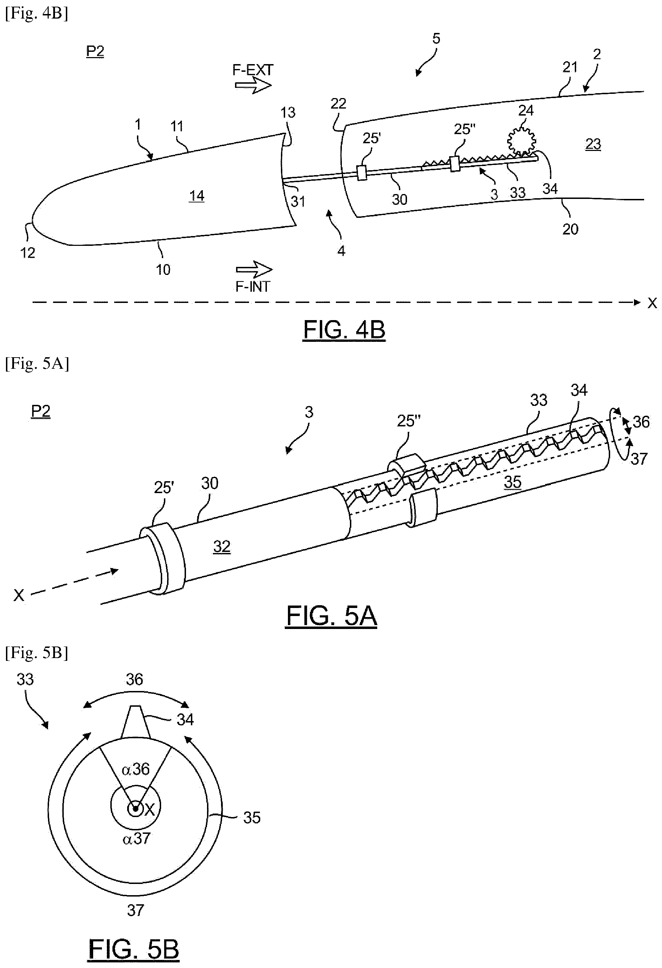

La forme de réalisation illustrée sur la [Fig.4A] et la [Fig.4B] diffère de la forme précédente en ce que l'entrée d'air 5 comporte deux organes de guidage 25', 25", à savoir un organe de guidage amont 25' et un organe de guidage aval 25", et que l'organe de guidage aval 25" est également configuré pour guider la barre d'entraînement 33. Comme illustré sur la [Fig.4A] et la [Fig.4B], l'organe de guidage amont 25' s'étend au voisinage de l'extrémité amont 22 et est configuré pour guider la barre de guidage 30 de même que l'organe de guidage 25 de la [Fig.3]. L'organe de guidage aval 25" s'étend quant à lui en aval de l'organe de guidage amont 25' de manière à guider successivement la barre de guidage 30 et la barre d'entraînement 33 lors d'un déplacement de la partie amont mobile 1. En pratique, l'organe de guidage aval 25" est au contact de la barre de guidage 30 en position rentrée P1 ([Fig.4A]) et de la barre d'entraînement 33 en position sortie P2 ([Fig.4B]). Lorsque la partie amont mobile 1 est sortie P2, l'organe de guidage aval 25" guide ainsi la barre de guidage 30 puis la barre d'entraînement 33, et inversement lorsque la partie amont mobile 1 est rentrée P1. Un tel guidage successif permet d'augmenter la stabilité lors du déplacement et améliore la reprise des efforts. Cela permet en outre de réduire la longueur de la barre de guidage 30 et donc de réduire globalement la masse et l'encombrement de l'organe de déplacement 3.

Dans l'exemple de la [Fig.5A] représentant une vue rapprochée de la [Fig.4B], les organes de guidage 25', 25" se présentent sous la forme de douilles à billes ou de coussinets. La barre d'entraînement 33 comporte une portion angulaire d'entraînement 36 où sont localisées les dents 34 et une portion angulaire de guidage 37 dépourvue de dents 34 et configurée pour coopérer avec l'organe de guidage aval 25". Autrement dit, les portions angulaires d'entraînement 36 et de guidage 37 s'étendent chacune sur toute la longueur de la barre d'entraînement 33 de manière partiellement périphérique et complémentaire. L'organe de guidage aval 25" coopère ainsi avec la portion angulaire de guidage 37 tandis que la roue dentée 24 coopère avec la portion angulaire d'entraînement 36, sans interférence ni gêne.

Plus précisément, comme illustré sur la [Fig.5B], la portion angulaire d'entraînement 36 s'étend dans cet exemple selon un angle α36 d'environ 60° tandis que la portion angulaire de guidage 37 s'étend de manière complémentaire selon un angle α37 d'environ 300°. De préférence, la portion angulaire de guidage 37 s'étend selon un angle α37 supérieur à 120°, préférentiellement supérieur à 180°, notamment dans le cas d'une douille à billes ou d'un coussinet, pour assurer un guidage suffisant et précis. De préférence également, l'angle α37 est inférieur à 330° pour permettre un entraînement des dents 34 sans gêne.

Comme illustré sur la [Fig.5A] et la [Fig.5B], la portion angulaire de guidage 37 s'étend de préférence dans le prolongement longitudinal de la barre de guidage 30 pour favoriser la continuité du guidage. Ainsi, dans cet exemple, la barre de guidage 30 comporte une paroi extérieure 32 cylindrique de section circulaire et la barre d'entraînement 33 comporte une paroi extérieure 35 également cylindrique de section circulaire de même diamètre. De même que précédemment, la barre de guidage 30 et la barre d'entraînement 33 forment une même pièce issue de même matière. Toujours dans cet exemple, les dents 34 sont montées en saillie de la paroi extérieure 35 de la barre d'entraînement 33 et l'organe de guidage aval 25" s'étend de manière partiellement périphérique autour de l'organe de déplacement 3, à savoir uniquement autour de la portion angulaire de guidage 37. L'ouverture angulaire de l'organe de guidage aval 25" est inférieure ou égale à l'angle α37 de la portion angulaire de guidage 37. Ainsi, l'organe de guidage aval 25" assure un guidage angulaire partiel de la barre de guidage 30 et de la barre d'entraînement 33.

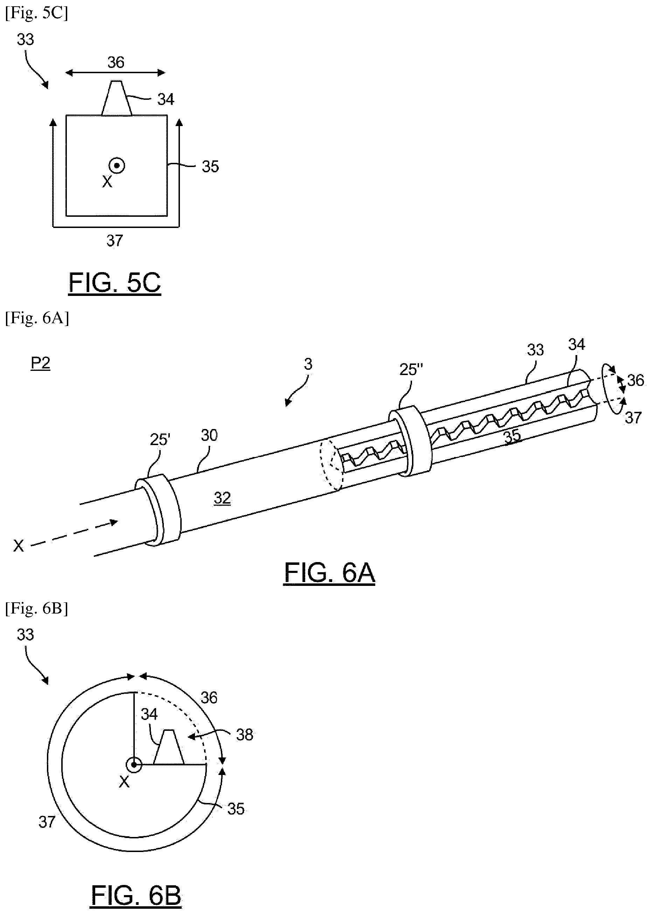

Il va de soi que l'organe de déplacement 3 peut comporter une section transversale de forme quelconque, autre que celle circulaire décrite. La [Fig.5C] illustre ainsi un autre exemple dans lequel la barre d'entraînement 33 et la barre de guidage 30 comportent une section transversale carrée. Une section transversale rectangulaire ou aplatie pourrait également être utilisée.

Selon une forme de réalisation alternative, en référence à la [Fig.6A] et la [Fig.6B], seule la portion angulaire de guidage 37 s'étend dans le prolongement de la barre de guidage 30 et la portion angulaire d'entraînement 36 comporte une zone évidée 38 dans laquelle sont montées les dents 34. Ainsi, les dents 34 ne forment pas de saillie dans le prolongement de la barre de guidage 30.

Dans cet exemple, la barre de guidage 30 comporte ainsi une paroi extérieure 32 de section transversale cylindrique et la barre d'entraînement 33 comporte une paroi extérieure 35 qui comporte une section transversale cylindrique de même diamètre excepté au niveau de la portion angulaire d'entraînement 36 où a été creusée la zone évidée 38.

Comme illustré sur la [Fig.6A] et la [Fig.6B], la section transversale de la barre d'entraînement 33 est de préférence incluse dans celle de la barre de guidage 30, de manière à permettre d'utiliser un organe de guidage aval s'étendant de manière périphérique, tel que celui illustré sur la [Fig.6A]. Autrement dit, la section transversale de la barre d'entraînement 33 est de préférence de forme et de taille inférieures ou égales à la section transversale de la barre de guidage 30 de manière à ce qu'un organe de guidage aval 25" adapté pour guider de manière périphérique la barre de guidage 30 puisse également être adapté pour guider la barre d'entraînement 33.

Ainsi, dans l'exemple de la [Fig.6A] et la [Fig.6B], les dents 34 s'étendent de manière radialement intérieure à la portion angulaire de guidage 37 par rapport à l'axe de l'organe de déplacement 3. Comme illustré sur la [Fig.6B], il en résulte que la section de la barre d'entraînement 33, dents 34 comprises, est incluse dans la section circulaire de la barre de guidage 30 représentée en pointillés. Ainsi, l'organe de guidage aval 25" assure un guidage angulaire périphérique de la barre de guidage 30 et un guidage partiel de la barre d'entraînement 33 en encerclant les dents 34.

L'organe de déplacement 3 peut être guidé et entraîné sur toute sa longueur sans contrainte. Cela permet avantageusement de réduire la longueur de l'organe de déplacement et, par conséquence, son encombrement. De telles dents intégrées 34 permettent de limiter l'encombrement transversal, ce qui est avantageux pour former une entrée d'air 5 de faible épaisseur.

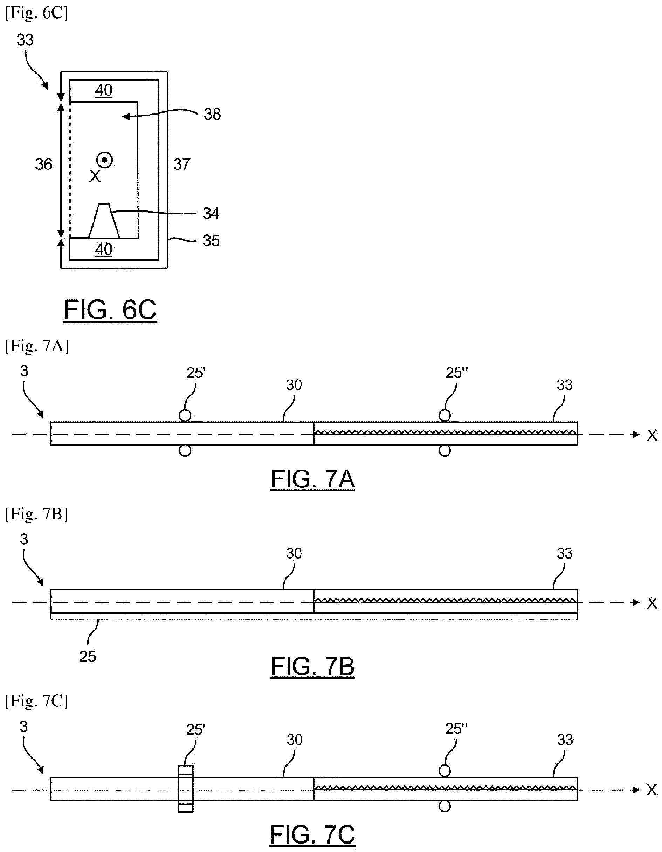

La [Fig.6C] illustre un autre exemple de barre de guidage 30 comportant une zone évidée 38 dans laquelle sont montées les dents 34. Dans cet exemple, la barre de guidage 30 comporte une section rectangulaire dans laquelle a été creusée la zone évidée 38, de section rectangulaire également. Ainsi, la barre de guidage 30 possède une section en forme de U. La barre de guidage 30 comporte deux branches 40 reliées entre elles et délimitant de part et d'autre la zone évidée 38. Dans cet exemple, les deux branches 40 s'étendent horizontalement, l'une au-dessus de l'autre. Les dents 34 sont montées sur la branche inférieure 40 et s'étendent verticalement. Les deux branches 40 sont suffisamment éloignées l'une de l'autre de manière à permettre le passage de la roue dentée 24 pour coopérer avec les dents 34.

Les figures 7A, 7B et 7C illustrent d'autres formes de réalisation de l'invention dans lesquelles l'(les) organe(s) de guidage se présente(nt) sous une forme autre que la douille à billes et le coussinet des figures 5A et 6A. Dans l'exemple de la [Fig.7A], l'organe de guidage amont 25' et l'organe de guidage aval 25" se présentent chacun sous la forme de galets ou de rouleaux. Plus précisément, l'organe de guidage amont 25' comprend un organe rotatif supérieur et un organe rotatif inférieur s'étendant de part et d'autre de la barre de guidage 30 et coopérant avec celle-ci de manière à l'entraîner en translation. De même pour l'organe de guidage aval 25" qui est également configuré pour coopérer avec la barre d'entraînement 33 comme décrit précédemment.

Dans l'exemple de la [Fig.7B], l'organe de guidage 25 se présente sous la forme d'un rail fixe. La barre de guidage 30, et dans cet exemple la barre d'entraînement 33 également, sont configurées pour coopérer directement ou indirectement avec le rail de manière à permettre leur translation.

Il va de soi que l'invention ne se limite pas aux exemples d'organes de guidage 25, 25', 25" décrits précédemment. Par ailleurs, dans l'exemple des figures 5A, 6A et 7A, tous les organes de guidage 25', 25" sont de nature identique mais il va de soi qu'un ou plusieurs organes de guidage 25', 25" pourraient différer des autres. Ainsi, dans l'exemple de la [Fig.7C], l'organe de guidage amont 25' se présente sous la forme d'une douille à billes tandis que l'organe de guidage aval 25" se présente sous la forme de galets.

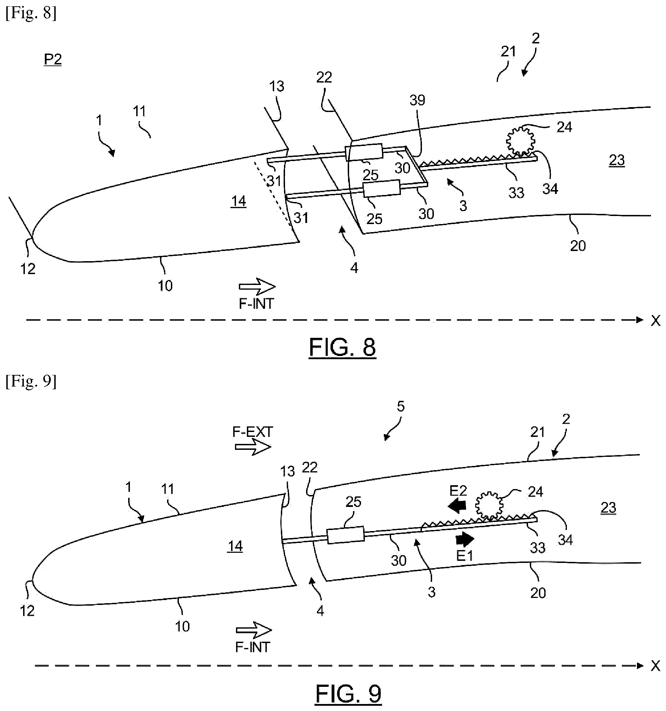

Selon une autre forme de réalisation illustrée sur la [Fig.8], l'organe de déplacement 3 comporte plusieurs barres de guidage 30, à savoir deux dans cet exemple, ainsi qu'un élément de liaison 39 reliant les barres de guidage 30 à la barre d'entraînement 33. Dans cet exemple, l'élément de liaison 39 s'étend sensiblement transversalement à l'axe longitudinal X et se présente sous la forme d'une barre. Comme illustré sur la [Fig.8], de préférence, la barre d'entraînement 33 s'étend radialement entre les barres de guidage 30, de manière centrée pour répartir les efforts équitablement. De manière avantageuse, une telle forme de réalisation permet de réduire le nombre d'organes de déplacement 3 nécessaires et de limiter le nombre de liaisons pignon-crémaillère, ce qui réduit l'encombrement et la masse embarquée.

On décrit par la suite un procédé d'utilisation en vol de l'entrée d'air 5 précédemment décrite. On considère la partie amont mobile 1 initialement en position sortie P2 et que l'ensemble propulsif d'aéronef 8 génère une vitesse subsonique faible en vol, à savoir de nombre de Mach inférieur à 0,5.

En référence à la [Fig.9], lorsque l'ensemble propulsif d'aéronef 8 accélère à des vitesses subsoniques élevées ou à des vitesses supersoniques, la roue dentée 24 est mise en mouvement pour déplacer la partie amont mobile 1 selon un premier sens de translation E1 orienté vers la position rentrée P1, de manière à réduire la section de l'entrée d'air 5 et donc le flux d'air intérieur F-INT admis.

Toujours en référence à la [Fig.9], lorsque l'ensemble propulsif d'aéronef 8 décélère à de faibles vitesses subsoniques, la roue dentée 24 est mise en mouvement selon un deuxième sens de rotation, opposé au premier sens de rotation, pour déplacer la partie amont mobile 1 selon un deuxième sens de translation E2 vers la position sortie P2, de manière à augmenter la section de l'entrée d'air 5 et donc le flux d'air intérieur F-INT admis.

De manière avantageuse, les organes de déplacement 3 de l'entrée d'air 5 selon l'invention permettent de déplacer de manière réactive, rapide et précise la partie amont mobile 1 grâce à une liaison pignon-crémaillère. En outre, les organes de déplacement 3 sont facilement synchronisables et comportent une masse et un encombrement réduits par rapport aux vérins linéaires traditionnellement utilisés. Ceci est particulièrement vérifié dans les formes de réalisation avec guidage de la barre d'entraînement 33, dans lesquelles l'organe de guidage 25" permet de guider successivement la barre de guidage 30 et la barre d'entraînement 33. L'encombrement est notamment minimal et le guidage particulièrement précis dans les formes de réalisation où les dents 34 sont montées dans une zone évidée 38 de la barre d'entraînement 33 de manière à permettre un guidage périphérique de la barre de guidage 30.

## Revendications

1. Entrée d'air (5) d'ensemble propulsif d'aéronef (8), ledit ensemble propulsif d'aéronef (8) s'étendant selon un axe longitudinal (X) orienté d'amont en aval et comprenant une turbomachine (6) configurée pour permettre la propulsion de l'aéronef à partir de l'accélération d'un flux d'air intérieur (F-INT) circulant d'amont en aval dans la turbomachine (6), ladite entrée d'air (5) s'étendant de manière circonférentielle autour de l'axe longitudinal (X) et comprenant une partie amont mobile (1), une partie aval fixe (2) et au moins un organe de déplacement (3) configuré pour déplacer la partie amont mobile (1) en translation par rapport à la partie aval fixe (2), ladite partie amont mobile (1) comprenant :
• une paroi intérieure amont (10), tournée vers l'axe longitudinal (X) et configurée pour guider le flux d'air intérieur (F-INT),
• une paroi extérieure amont (11), opposée à la paroi intérieure amont (10) et configurée pour guider un flux d'air extérieur (F-EXT), et
• une lèvre d'entrée d'air (12) reliant la paroi intérieure amont (10) et la paroi extérieure amont (11),
• ladite partie amont mobile (1) étant mobile entre une position rentrée (P1), dans laquelle la partie amont mobile (1) est adjacente à la partie aval fixe (2), et une position sortie (P2), dans laquelle la partie amont mobile (1) est écartée en amont de la partie aval fixe (2) de manière à délimiter ensemble un canal traversant (4) de circulation fluidique entre le flux d'air extérieur (F-EXT) et le flux d'air intérieur (F-INT),
• entrée d'air **caractérisée par le fait que** l'organe de déplacement (3) comprend :
• au moins une barre de guidage (30) reliée à la partie amont mobile (1), et
• une barre d'entraînement (33) comprenant une pluralité de dents (34),
• la partie aval fixe (2) comportant, pour chaque organe de déplacement (3) :
• une roue dentée (24) configurée pour être entraînée en rotation et pour coopérer avec les dents (34) de la barre d'entraînement (33) de manière à former une liaison pignon-crémaillère permettant de déplacer l'organe de déplacement (3) et la partie amont mobile (1), et
• au moins un organe de guidage (25, 25', 25") configuré pour guider la barre de guidage (30) lors du déplacement de l'organe de déplacement (3).

2. Entrée d'air (5) selon la revendication 1, dans laquelle la partie amont mobile (1) s'étend de manière circonférentielle autour de l'axe longitudinal (X), et de préférence forme un ensemble unitaire, préférentiellement monobloc.

3. Entrée d'air (5) selon l'une des revendications 1 et 2, dans laquelle :
• La barre d'entraînement (33) s'étend dans le prolongement aval de la barre de guidage (30) et comprend une paroi extérieure (35) comprenant une portion angulaire d'entraînement (36), où sont montées les dents (34), et une portion angulaire de guidage (37),
• au moins un organe de guidage (25) se présentant sous la forme d'un organe de guidage aval (25") configuré pour guider successivement la barre de guidage (30) et la portion angulaire de guidage (37) de la barre d'entraînement (33).

4. Entrée d'air (5) selon la revendication 3, dans laquelle la portion angulaire de guidage (37) s'étend sur au moins 120° de la paroi extérieure (35) de la barre d'entraînement (33), de préférence sur plus de 180°, et préférentiellement sur au plus 330°.

5. Entrée d'air (5) selon l'une des revendications 3 et 4, dans laquelle la portion angulaire d'entraînement (36) comporte une zone évidée (38) dans laquelle sont montées les dents (34), de préférence, de sorte à s'étendre de manière radialement intérieure à la portion angulaire de guidage (37) par rapport à l'axe (X3) de l'organe de déplacement (3).

6. Entrée d'air (5) selon l'une des revendications 3 à 5, dans laquelle l'organe de guidage aval (25") s'étend de manière périphérique autour de l'organe de déplacement (3).

7. Entrée d'air (5) selon l'une des revendications 3 à 5, dans laquelle l'organe de guidage aval (25") s'étend de manière partiellement périphérique autour de l'organe de déplacement (3).

8. Entrée d'air (5) selon l'une des revendications 1 et 2, dans laquelle au moins un organe de déplacement (3) comporte une pluralité de barres de guidage (30) et un élément de liaison (39) configuré pour relier la barre d'entraînement (33) à chaque barre de guidage (30).

9. Ensemble propulsif d'aéronef (8) s'étendant selon un axe longitudinal (X) orienté d'amont en aval et comprenant une turbomachine (6) configurée pour permettre la propulsion de l'aéronef à partir de l'accélération du flux d'air intérieur (F-INT) circulant d'amont en aval dans la turbomachine (6), ledit ensemble propulsif d'aéronef (8) comprenant une entrée d'air (5) selon l'une des revendications 1 à 8, la turbomachine (6) étant de préférence supersonique.

10. Procédé d'utilisation en vol d'une entrée d'air (5) d'ensemble propulsif d'aéronef (8) selon l'une des revendications 1 à 8, dans lequel la roue dentée (24) est entraînée selon un premier sens de rotation pour déplacer la partie amont mobile (1) selon un premier sens de translation (E1) orienté de la position sortie (P2) vers la position rentrée (P1), de manière à réduire le flux d'air intérieur (F-INT) admis.

## Patentansprüche

1. Lufteinlass (5) für eine Flugzeugantriebseinheit (8), wobei sich die Flugzeugantriebseinheit (8) gemäß einer Längsachse (X) erstreckt, die von stromaufwärts nach stromabwärts ausgerichtet ist und eine Turbomaschine (6) umfasst, die ausgelegt ist, um den Antrieb des Flugzeugs durch die Beschleunigung eines Innenluftstroms (F-INT) zu ermöglichen, der in der Turbomaschine (6) von stromaufwärts nach stromabwärts strömt, wobei sich der Lufteinlass (5) in Umfangsrichtung um die Längsachse (X) erstreckt und einen beweglichen stromaufwärtigen Teil (1), einen feststehenden stromabwärtigen Teil (2) und mindestens ein Verschiebeelement (3) umfasst, das ausgelegt ist, um den beweglichen stromaufwärtigen Teil (1) translatorisch relativ zum feststehenden stromabwärtigen Teil (2) zu verschieben, wobei der bewegliche stromaufwärtige Teil (1) umfasst:
• eine stromaufwärtige Innenwand (10), die zur Längsachse (X) hin ausgerichtet und ausgelegt ist, um den Innenluftstrom (F-INT) zu leiten,
• eine stromaufwärtige Außenwand (11), die der stromaufwärtigen Innenwand (10) gegenüberliegt und ausgelegt ist, um einen Außenluftstrom (F-EXT) zu leiten, und
• eine Lufteinlasslippe (12), die die stromaufwärtige Innenwand (10) und die stromaufwärtige Außenwand (11) verbindet,
• wobei der bewegliche stromaufwärtige Teil (1) zwischen einer eingefahrenen Position (P1), in der der bewegliche stromaufwärtige Teil (1) in der Nähe des feststehenden stromabwärtigen Teils (2) ist, und einer ausgefahrenen Position (P2), in der der bewegliche stromaufwärtige Teil (1) stromaufwärts vom feststehenden stromabwärtigen Teil (2) beabstandet ist, beweglich ist, so dass sie zusammen einen Durchgangskanal (4) für die Fluidzirkulation zwischen dem Außenluftstrom (F-EXT) und dem Innenluftstrom (F-INT) begrenzen,
• wobei der Lufteinlass **dadurch gekennzeichnet ist, dass** das Verschiebeelement (3) umfasst:
• mindestens eine mit dem beweglichen stromaufwärtigen Teil (1) verbundene Führungsstange (30) und
• eine Antriebsstange (33), die eine Vielzahl von Zähnen (34) umfasst,
• wobei der feststehende stromabwärtige Teil (2) für jedes Verschiebeelement (3) aufweist:
• ein Zahnrad (24), das ausgelegt ist, um rotatorisch angetrieben zu werden und um mit den Zähnen (34) der Antriebsstange (33) derart zusammenzuwirken, dass eine Verbindung Zahnrad-Zahnstange gebildet wird, die es ermöglicht, das Verschiebeelement (3) und den beweglichen stromaufwärtigen Teil (1) zu verlagern, und
• mindestens ein Führungselement (25, 25', 25"), das ausgelegt ist, um die Führungsstange (30) bei der Verlagerung des Verschiebeelements (3) zu führen.

2. Lufteinlass (5) nach Anspruch 1, wobei sich der bewegliche stromaufwärtige Teil (1) in Umfangsrichtung um die Längsachse (X) erstreckt und vorzugsweise eine einheitliche, vorzugsweise einteilige Einheit bildet.

3. Lufteinlass (5) nach einem der Ansprüche 1 und 2, wobei:
• sich die Antriebsstange (33) in der stromabwärtigen Verlängerung der Führungsstange (30) erstreckt und eine Außenwand (35) mit einem Antriebswinkelabschnitt (36), an dem die Zähne (34) angebracht sind, und einem Führungswinkelabschnitt (37) umfasst,
• mindestens ein Führungselement (25) in Form eines stromabwärtigen Führungselements (25") vorliegt ist, das ausgelegt ist, um nacheinander die Führungsstange (30) und den Führungswinkelabschnitt (37) der Antriebsstange (33) zu führen.

4. Lufteinlass (5) nach Anspruch 3, wobei sich der Führungswinkelabschnitt (37) über mindestens 120° der Außenwand (35) der Antriebsstange (33), vorzugsweise über mehr als 180° und vorzugsweise über höchstens 330° erstreckt.

5. Lufteinlass (5) nach einem der Ansprüche 3 und 4, wobei der Antriebswinkelabschnitt (36) einen ausgesparten Bereich (38) aufweist, in dem die Zähne (34) vorzugsweise derart angebracht sind, dass sie sich radial innerhalb des Führungswinkelabschnitts (37) in Bezug auf die Achse (X3) des Verschiebeelements (3) erstrecken.

6. Lufteinlass (5) nach einem der Ansprüche 3 bis 5, wobei sich das stromabwärtige Führungselement (25") peripher um das Verschiebeelement (3) herum erstreckt.

7. Lufteinlass (5) nach einem der Ansprüche 3 bis 5, wobei sich das stromabwärtige Führungselement (25") teilweise peripher um das Verschiebeelement (3) herum erstreckt.

8. Lufteinlass (5) nach einem der Ansprüche 1 und 2, wobei mindestens ein Verschiebeelement (3) eine Vielzahl von Führungsstangen (30) und ein Verbindungselement (39) aufweist, das ausgelegt ist, um die Antriebsstange (33) mit jeder Führungsstange (30) zu verbinden.

9. Flugzeugantriebseinheit (8), die sich gemäß einer von stromaufwärts nach stromabwärts ausgerichteten Längsachse (X) erstreckt und eine Turbomaschine (6) umfasst, die ausgelegt ist, um den Antrieb des Flugzeugs durch die Beschleunigung des in der Turbomaschine (6) von stromaufwärts nach stromabwärts strömenden Innenluftstroms (F-INT) zu ermöglichen, wobei die Flugzeugantriebseinheit (8) einen Lufteinlass (5) nach einem der Ansprüche 1 bis 8 umfasst, wobei die Turbomaschine (6) vorzugsweise eine Überschallturbomaschine ist.

10. Verfahren zur Verwendung eines Lufteinlasses (5) einer Flugzeugantriebseinheit (8) nach einem der Ansprüche 1 bis 8 im Flug, wobei das Zahnrad (24) in einer ersten Rotationsrichtung angetrieben wird, um den beweglichen stromaufwärtigen Teil (1) in einer ersten Translationsrichtung (E1) aus der ausgefahrenen Position (P2) in die eingefahrene Position (P1) derart zu verlagern, dass der aufgenommene Innenluftstrom (F-INT) reduziert wird.

## Claims

1. An air inlet (5) for an aircraft propulsion assembly (8), said aircraft propulsion assembly (8) extending along a longitudinal axis (X) oriented from upstream to downstream and comprising a turbomachine (6) configured to allow propulsion of the aircraft from the acceleration of an internal air flow (F-INT) circulating from upstream to downstream in the turbomachine (6), said air inlet (5) circumferentially extending about the longitudinal axis (X) and comprising a movable upstream part (1), a fixed downstream part (2) and at least one moving member (3) configured to translationally move the movable upstream part (1) with respect to the fixed downstream part (2), said movable upstream part (1) comprising:
- an upstream internal wall (10), pointing towards the longitudinal axis (X) and configured to guide the internal air flow (F-INT),
- an upstream external wall (11), opposite to the upstream internal wall (10) and configured to guide an external air flow (F-EXT), and
- an air inlet lip (12) connecting the upstream internal wall (10) and the upstream external wall (11),
- said movable upstream part (1) being movable between a retracted position (P1), in which the movable upstream part (1) is adjacent to the fixed downstream part (2), and a deployed position (P2), in which the movable upstream part (1) is spaced apart upstream of the fixed downstream part (2) in order to delimit together a through channel (4) for fluidly circulating between the external air flow (F-EXT) and the internal air flow (F-INT),
- which air inlet is **characterized in that** the moving member (3) comprises:
- at least one guide bar (30) connected to the movable upstream part (1), and
- a drive bar (33) comprising a plurality of teeth (34),
- the fixed downstream part (2) comprising, for each moving member (3):
- a toothed wheel (24) configured to be rotatably driven and to cooperate with the teeth (34) of the drive bar (33) so as to form a rack-and-pinion connection for moving the moving member (3) and the movable upstream part (1), and
- at least one guide member (25, 25', 25") configured to guide the guide bar (30) when moving the moving member (3).

2. The air inlet (5) according to claim 1, wherein the movable upstream part (1) circumferentially extends about the longitudinal axis (X), and preferably forms a unitary assembly, more preferably a one-piece assembly.

3. The air inlet (5) according to any of claims 1 and 2, wherein:
- the drive bar (33) extends as a downstream extension of the guide bar (30) and comprises an external wall (35) comprising an angular drive portion (36), where the teeth (34) are mounted, and an angular guide portion (37),
- at least one guide member (25) in the form of a downstream guide member (25") configured to successively guide the guide bar (30) and the angular guide portion (37) of the drive bar (33).

4. The air inlet (5) according to claim 3, wherein the angular guide portion (37) extends over at least 120° from the external wall (35) of the drive bar (33), preferably over more than 180°, and more preferably 330° at the most.

5. The air inlet (5) according to any of claims 3 and 4, wherein the angular drive portion (36) comprises a recessed zone (38) in which the teeth (34) are mounted, preferably so as to extend radially inwardly of the angular guide portion (37) with respect to the axis (X3) of the moving member (3).

6. The air inlet (5) according to any of claims 3 to 5, wherein the downstream guide member (25") peripherally extends about the moving member (3).

7. The air inlet (5) according to any of claims 3 to 5, wherein the downstream guide member (25") partially peripherally extends about the moving member (3).

8. The air inlet (5) according to any of claims 1 and 2, wherein at least one moving member (3) comprises a plurality of guide bars (30) and a connection element (39) configured to connect the drive bar (33) to each guide bar (30).

9. An aircraft propulsion assembly (8) extending along a longitudinal axis (X) oriented from upstream to downstream and comprising a turbomachine (6) configured to allow propulsion of the aircraft from the acceleration of the internal air flow (F-INT) circulating from upstream to downstream in the turbomachine (6), said aircraft propulsion assembly (8) comprising an air inlet (5) according to one of claims 1 to 8, the turbomachine (6) preferably being supersonic.

10. A method for using in flight an air inlet (5) of an aircraft propulsion assembly (8) according to one of claims 1 to 8, wherein the toothed wheel (24) is driven in a first direction of rotation to move the movable upstream part (1) in a first direction of translation (E1) oriented from the deployed position (P2) to the retracted position (P1), so as to reduce the internal air flow (F-INT) taken in.
